# DEMANDE DE BREVET EUROPEEN

(11) **EP 1 057 609 A1**
(43) Date de publication de la demande: **06.12.2000**
(21) Numéro de dépôt: 00420114.1
(22) Date de dépôt: 05.06.2000
(51) Int. Cl.: B29C 45/26, A47F 7/14

(54) **Procédé de fabrication de présentoirs de documents, feuilles feuillets en matériau plastique**

(30) Priorité: 04.06.1999 FR 9907377
(71) Demandeur: Gricourt, Yves, 71260 Montbellet (FR)
(72) Inventeur: Gricourt, Yves, 71260 Montbellet (FR)
(74) Mandataire: Dupuis, François

(57) **Abrégé**

Procédé de fabrication de présentoirs de documents, feuilles, feuillets en matériau plastique, qui consiste à utiliser un moule (M) ayant des matrices (3) en regard à pans obliques (3a) pour définir la plaque (2a) principale de fond du présentoir, dans un plan oblique par rapport au plan horizontal d'appui, et à agencer le moule et l'une des matrices en particulier avec un noyau fixe (4) disposé perpendiculaire ou sensiblement au plan oblique (3a) précité, de manière à délimiter lors de l'injection de la matière plastique de moulage, une ouverture (2b) dans la plaque précitée, ledit présentoir étant réalisé moulé par injection en une seule fois avec une plaque de fond (2a) servant à l'appui des documents, des ailes supérieures (2c) et inférieures (2d) pour le maintien des documents et de la stabilité du présentoir et un piétement ou base d'appui (2e) horizontal avant incluant en son milieu une patte (2f) d'appui et de retenue des documents, et de butée du mandrin fixe disposé dans le moule d'injection.

## Description

L'invention se rattache au secteur des présentoirs de documents réalisés en matériau plastique, du type par exemple transparent.

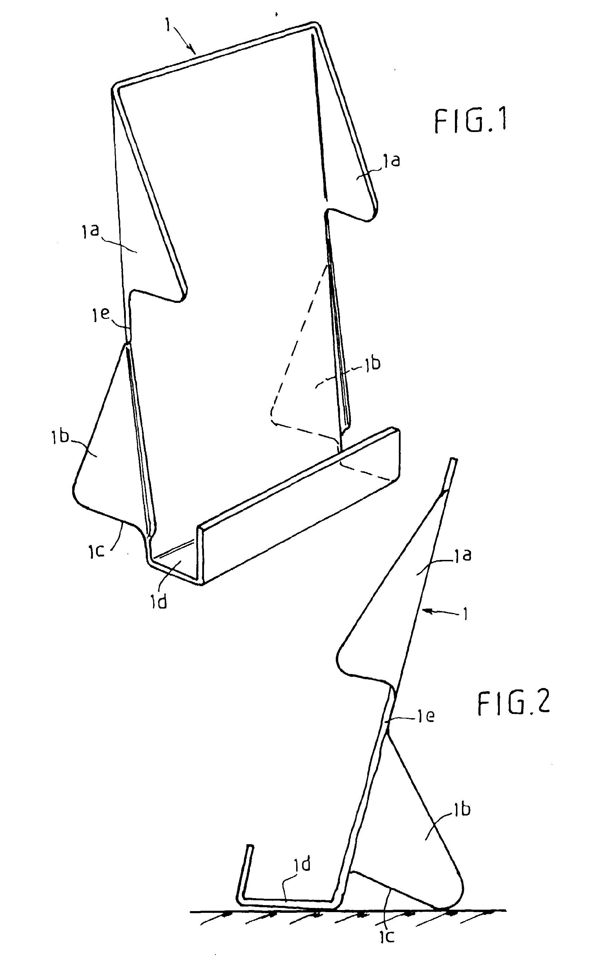

Le Demandeur fabrique et commercialise des présentoirs du type représenté aux figures 1 et 2 des dessins. Ils sont conçus à partir de plaques (1) planes qui sont découpées et pliées pour constituer des ailes supérieures orientées vers l'avant (1a) de maintien des documents, des ailes inférieures (1b) orientées vers l'arrière et constituant par leur chant inférieur (1c) une base d'appui, et avec un profilé avant (1d) formant gouttière en forme de U constituant un piétement d'appui et permettant également le rangement des documents.

La mise en oeuvre de ce type de présentoir est complexe et nécessite de nombreuses opérations de découpages avec chutes, de pliages entraînant de nombreuses manipulations. Le coût de revient est élevé.

Les pliages inverses des ailes supérieure et inférieure contribuent à fragiliser la zone intermédiaire (le) et la plaque est déformée dans une configuration curviligne, ce qui provoque des cassures.

Cela nuit à l'esthétique des présentoirs. Par ailleurs, la stabilité de ce dernier n'est pas toujours assurée.

Le Demandeur a donc recherché une solution nouvelle de fabrication répondant aux inconvénients précités qui permettent de fabriquer des présentoirs dans des conditions de prix de revient acceptables par rapport au prix du marché.

Selon une première caractéristique de l'invention, la fabrication du présentoir de documents s'effectue par un procédé qui consiste à utiliser un moule ayant des matrices en regard à pans obliques pour définir la plaque principale de fond du présentoir, dans un plan oblique par rapport au plan horizontal d'appui, et à agencer le moule et l'une des matrices en particulier avec un noyau fixe disposé perpendiculaire ou sensiblement au plan oblique précité, de manière à délimiter lors de l'injection de la matière plastique de moulage, une ouverture dans la plaque précitée, ledit présentoir étant réalisé moulé par injection en une seule fois avec une plaque de fond servant à l'appui des documents, des ailes supérieures et inférieures pour le maintien des documents et de la stabilité du présentoir et un piétement d'appui horizontal avant incluant en son milieu une patte d'appui et de retenue des documents, et de butée du mandrin fixe disposé dans le moule d'injection.

Selon une autre caractéristique, le présentoir obtenu par le procédé de l'invention, comprend une plaque d'appui de ces documents avec une découpe inférieure correspondant à l'entourage du mandrin fixe et une patte avant relevée de butée.

Ces caractéristiques et d'autres encore ressortiront bien de la suite de la description pour fixer l'objet de l'invention.

Il va être décrit maintenant de manière non limitative, les figures des dessins, où :
- la figure 1 est une vue d'un présentoir de documents selon l'art antérieur ;
- la figure 2 est une vue de profil selon la figure 1 ;

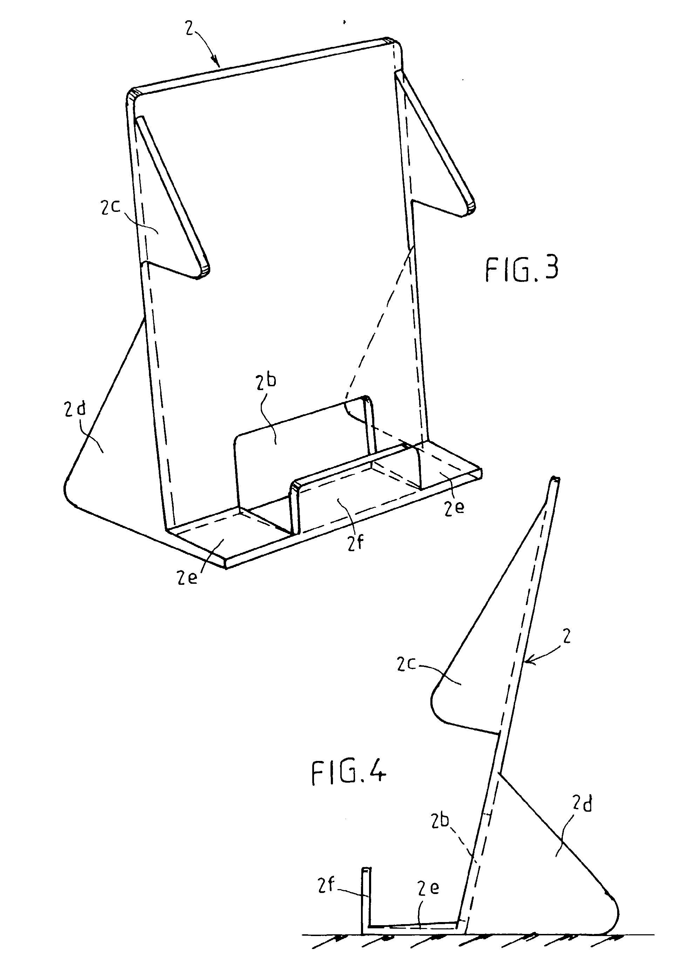

- la figure 3 est une vue d'un présentoir de documents selon l'invention ;
- la figure 4 est une vue de profil selon la figure 3 ;

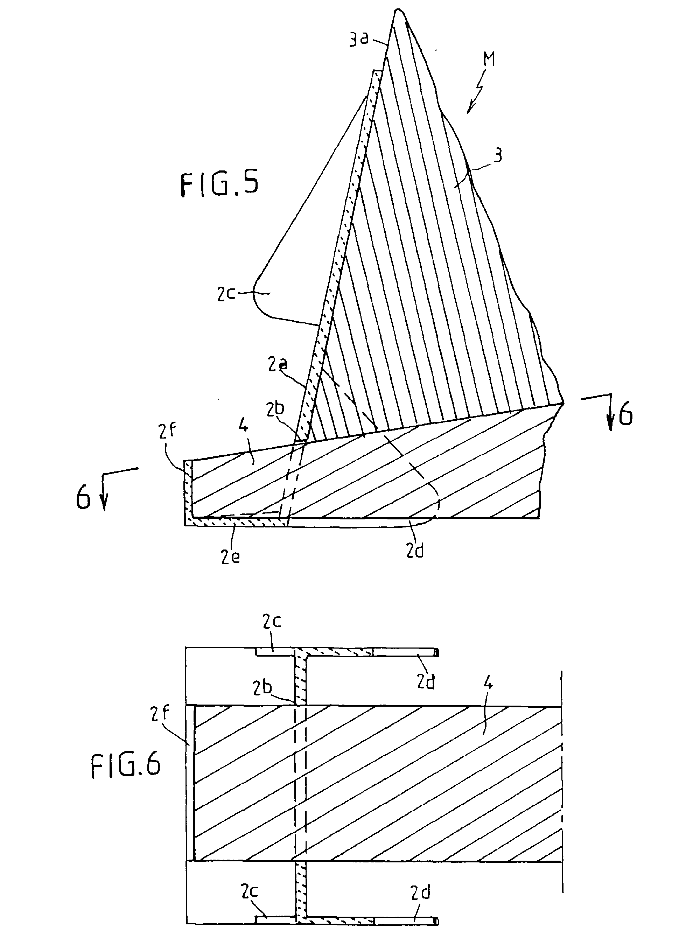

- la figure 5 est une vue en coupe de l'outillage nécessaire à la fabrication du présentoir avec la représentation d'une seule des deux matrices du moule ;
- la figure 6 est une vue en coupe transversale selon la ligne VI-VI de la figure 5.

Afin de rendre plus concret l'objet de l'invention, on le décrit maintenant d'une manière non limitative illustrée aux figures des dessins.

Le procédé de fabrication du présentoir (2) en matière plastique, transparent ou opaque, est effectué par injection.

Le moule (M) comprend deux matrices qui sont susceptibles d'être solidarisées de manière connue par ladite injection.

Selon l'invention, la matrice (3) présente un plan oblique (3a) permettant la formation de la plaque (2a) du présentoir. Cette matrice autorise la fixation et mise en oeuvre d'un noyau (4) débordant extérieurement du plan oblique précité.

La largeur de ce noyau est inférieure à la largeur de la plaque, de manière à définir comme représentée une ouverture (2b). Dans la partie inférieure de ladite plaque, les deux matrices sont conformées de manière classique pour la formation du présentoir avec des ailes supérieures (2c) de retenue des documents et inférieures (2d) de stabilisation formant plan d'appui.

En outre, le présentoir présente sur sa face avant une base d'appui (2^{e}) réalisée en deux parties, celle-ci étant reliée par une patte verticale (2f) disposée en regard de l'ouverture résultant du noyau fixe disposé dans le moule précité.

Le présentoir de documents tel que décrit par l'invention offre de grands avantages par rapport à l'art antérieur, et notamment sa solidité, sa non déformabilité, son maintien stable sur tous supports d'appuis.

Le coût de fabrication est compétitif par rapport aux fabrications de présentoirs antérieurs et tel que rappelé précédemment, par le fait qu'une seule opération de fabrication est nécessaire.

## Revendications

1. Procédé de fabrication de présentoirs de documents, feuilles, feuillets en matériau plastique, qui consiste à utiliser un moule (M) ayant des matrices (3) en regard à pans obliques (3a) pour définir la plaque (2a) principale de fond du présentoir, dans un plan oblique par rapport au plan horizontal d'appui, et à agencer le moule et l'une des matrices en particulier avec un noyau fixe (4) disposé perpendiculaire ou sensiblement au plan oblique (3a) précité, de manière à délimiter lors de l'injection de la matière plastique de moulage, une ouverture (2b) dans la plaque précitée, ledit présentoir étant réalisé moulé par injection en une seule fois avec une plaque de fond (2a) servant à l'appui des documents, des ailes supérieures (2c) et inférieures (2d) pour le maintien des documents et de la stabilité du présentoir et un piétement ou base d'appui (2e) horizontal avant incluant en son milieu une patte (2f) d'appui et de retenue des documents, et de butée du mandrin fixe disposé dans le moule d'injection.

2. Présentoir obtenu selon le procédé selon la revendication 1, caractérisé en ce qu'il comprend une plaque d'appui (2a) de ces documents avec une ouverture (2b) inférieure correspondant à l'entourage du mandrin fixe et une patte avant (2f) relevée de butée.

3. Présentoir selon la revendication 2, obtenu par la mise en oeuvre du procédé selon la revendication 1.
